# EUROPÄISCHE PATENTANMELDUNG

(11) **EP 0 993 134 A2**
(43) Veröffentlichungstag der Anmeldung: **12.04.2000**
(21) Anmeldenummer: 99440231.1
(22) Anmeldetag: 20.08.1999
(51) Int. Cl.: H04J 3/06

(54) **Verfahren zum Übertragen von Taktsignalen, Verfahren zum Synchronisieren von Taktgeneratoren oder Netzelementen, Netzelement und Taktgenerator**

(30) Priorität: 05.10.1998 DE 19845767
(71) Anmelder: ALCATEL, 75008 Paris (FR)
(72) Erfinder: Wolf, Dr. Michael Joachim, 74395 Mundelsheim (DE)
(74) Vertreter: Brose, Gerhard, Dipl.-Ing.

(57) **Zusammenfassung**

In synchronen digitalen Nachrichtenübertragungsnetzen erfolgt eine gegenseitige Synchronisation aller Netzelemente, indem jedes Netzelement ein empfangenes Taktsignal oder ein aus einem empfangenen Nachrichtensignal abgeleitetes Taktsignal anhand der Taktqualität zur Synchronisation auswählt. Während in Nachrichtensignalen eine Synchronisationsstatusmeldung enthalten ist, die die Taktqualität angibt, ist bei Taktsignalen, die über einfache Taktschnittstellen übertragen werden, eine Signalisierung der Taktqualität bislang nicht möglich.

Angegeben werden ein Verfahren zum Übertragen von Taktsignalen (CS) in einem synchronen digitalen Nachrichtenübertragungsnetz und ein Verfahren zum Synchronisieren von Taktgeneratoren (SSU) oder Netzelementen (SEC), bei denen eine Signalisierung der Taktqualität mittels Phasenmodulation des Taktsignals (CS) erfolgt. Das Taktsignal (CS) wird über eine einfache Taktschnittstelle (T4, CLO) übertragen beziehungsweise empfangen (T3, CLI) und enthält eine für die Taktqualität charakteristische Phasenmodulation. Die Phasenmodulation wird erkannt und daraus wird eine Qualitätsinformation abgeleitet. In Abhängigkeit der Qualitätsinformation werden der Taktgenerator (SSU) oder das Netzelement (SEC) auf das Taktsignal synchronisiert. Weiter sind ein Taktgenerator (SSU) und ein Netzelement (SEC; NE) angegeben, die zur Durchführung der beiden Verfahren geeignet sind.

## Beschreibung

Die Erfindung betrifft ein Verfahren zum Übertragen von Taktsignalen in einem synchronen digitalen Nachrichtenübertragungsnetz nach dem Oberbegriff des Anspruchs 1, ein Verfahren zum Synchronisieren von Taktgeneratoren oder Netzelementen eines synchronen digitalen Nachrichtenübertragungsnetzes nach dem Oberbegriff des Anspruchs 6, ein Netzelement eines synchronen digitalen Nachrichtenübertragungsnetzes nach dem Oberbegriff des Anspruchs 8 sowie einen Taktgenerator für ein synchrones digitales Nachrichtenübertragungsnetz nach dem Oberbegriff des Anspruchs 10.

In einem Artikel von Th. Klett, "Aspekte der Netzsynchronisation" aus Alcatel Telecom Rundschau, 1. Quartal 1997, ist beschrieben, daß in einem synchronen digitalen Nachrichtenübertragungsnetz der synchronen digitalen Hierarchie (SDH) eine gegenseitige Synchronisation der Netzelemente erforderlich ist. In Netzknoten sind nach dem Artikel auch dedizierte Taktgeneratoren vorgesehen, die ein Taktsignal an alle Netzelemente des Knotens verteilen. Die Verteilung geschieht entweder über Taktschnittstellen, sogenannte 2-MHz-Schnittstellen, oder über Schnittstellen für 2-MBit-Verbindungen.

Zur Synchronisation werden Synchronisationssignale (Taktsignale) zwischen den Netzelementen bzw. zwischen Netzelementen und Taktgenerator übertragen. Entweder erfolgt eine Übertragung von 2-MHz-Signalen über gesonderte Synchronisationsverbindungen (Taktschnittstellen) oder es werden Nachrichtensignale mit einer Bitrate von Vielfachen von 155 MHz verwendet, aus denen ein Taktsignal abgeleitet wird. Jedes Netzelement erhält von mehreren benachbarten Netzelementen Synchronisationssignale und wählt anhand einer Synchronisationsstatusmeldung (SSM), die die Taktqualität angibt, eines der Synchronisationssignale als Referenztaktsignal aus. Bei 2-MHz-Verbindungen ist es jedoch nicht möglich eine Synchronisationsstatusmeldung zu übertragen, daher werden 2-MBit-Verbindungen zur Übertragung der Synchronisationssignale den 2-MHz-Verbindungen vorgezogen. Hierzu sind jedoch wesentlich aufwendigere und teurere Schnittstelleneinrichtungen erforderlich.

Eine Aufgabe der Erfindung ist es, ein alternatives Verfahren zur Übertragung von Synchronisationssignalen anzugeben, bei dem mit dem Taktsignal eine Qualitätsinformation übertragen werden kann und das mit einfacheren Schnittstelleneinrichtungen auskommt. Eine weitere Aufgabe der Erfindung besteht darin, ein Verfahren zum Synchronisieren von Taktgeneratoren oder Netzelementen eines synchronen digitalen Nachrichtenübertragungsnetzes anzugeben, bei dem Taktsignale über einfache Taktschnittstellen empfangen werden können. Andere Aufgaben der Erfindung liegen darin, ein Netzelement und einen Taktgenerator anzugeben, die zum Empfangen oder Übertragen von Taktsignalen eine Taktschnittstelle enthalten, mit der ermöglicht wird, mit dem Taktsignal eine Qualitätsinformation zu übertragen.

Die Aufgabe wird hinsichtlich des Übetragungsverfahrens gelöst durch die Merkmale des Anspruchs 1, hinsichtlich des Synchronisationsverfahrens durch die Merkmale des Anspruchs 6, hinsichtlich des Netzelementes durch die Merkmale des Anspruchs 8 und hinsichtlich des Taktgenerators durch die Merkmale des Anspruchs 10. Vorteilhafte Ausgestaltungen sind den abhängigen Ansprüchen zu entnehmen.

Vorteile der Erfindung liegen darin, daß sie mit wenigen, einfachen technischen Mitteln realisiert werden kann, daß die Qualitätsinformation mit dem Taktsignal im ganzen Nachrichtenübertragungsnetz verfügbar ist und daß das erfindungsgemäße Verfahren in beide Richtungen, vom Taktgenerator zum Netzelement sowie vom Netzelement zum Taktgenerator, eingesetzt werden kann.

Im folgenden wird die Erfindung anhand der Figuren 1 bis 5 in mehreren Ausführungsbeispielen erläutert. Es zeigt:
- Figur 1:: ein Netzelement eines ersten Ausführungsbeispiels;
- Figur 2a:: einen Taktgenerator eines zweiten Ausführungsbeispiels,
- Figur 2b:: eine Weiterbildung des Taktgenerators des zweiten Ausführungsbeispiels,
- Figur 3:: das Zusammenspiel zwischen einem erfindungsgemäßen Taktgenerator und einem erfindungsgemäßen Netzelement in einem dritten Ausführungsbeispiel
- Figur 4:: ein Flußdiagramm des erfindungsgemäßen Übertragungsverfahrens und
- Figur 5:: ein Flußdiagramm des erfindungsgemäßen Synchronisationsverfahrens.

In synchronen digitalen Nachrichtenübertragungsnetzen wie SDH- oder SONET-Netzen (SDH: synchronous optical hierarchy, SONET: synchronous optical network) ist es notwendig, daß alle Netzelemente des Netzes innerhalb festgelegter Grenzen synchron miteinander arbeiten. Dazu wird eine gegenseitige Synchronisierung durchgeführt, d.h. jedes Netzelement wählt eines der Nachrichtensignale, die es von benachbarten Netzelementen empfängt und von denen es ein Taktsignal ableitet, oder aber ein anderes Taktsignal einer weiteren Taktquelle wie einem primären Referenztaktgenerator, einem GPS-Modul oder einem Knotentaktgenerator (SSU: synchronization supply unit) als Referenztakt für die Synchronisation seiner internen Taktversorgungsschaltung aus. Im Kopfbereich von Nachrichtensignalen wird zum Zwecke der Taktauswahl eine Synchronisationsstatusmeldung (SSM: synchronization status message) übertragen. Eine Synchronisationsstatusmeldung kann jedoch nur in Nachrichtensignalen übertragen werden, nicht jedoch in Taktsignalen wie z.B. 2-MHz-Signalen. Als Taktqualität wird die langfristige Frequenz- und Phasenstabilität von Taktsignalen gegenüber einer Sollfrequenz bezeichnet, z.B. die Tagesabweichung. Bislang sind die in Tabelle 1 angegebenen Synchronisationsstatusmeldungen festgelegt:

**Tabelle 1:**

| Synchronisationsstatusmeldungen | | |
|---|---|---|
| Qualität | Stabilitätsanforderung | Verwendung |
| G.811 | 10E-11 Langzeitfrequenzabweichung | Primärer Referenztaktgenerator (PRC) |
| G.812T | 5*10E-10 Offset 10E-9 Tagesabweichung | Durchgangsknoten (SSU-transit) |
| G.812L | 10E-8 Offset 2*10E-8 Tagesabweichung | lokaler Knoten (SSU-local) |
| G.813 | 5*10E-8 Offset 5*10E-7 Tagesabweichung | synchroner Gerätetakt (SEC) |
| DNU | Nicht verwenden ("do not use for synchronization") | |
| Unknown | Qualität unbekannt | |

Netzelemente für synchrone digitale Nachrichtenübertragungsnetze sind z.B. Add/Drop-Multiplexer, Leitungsmultiplexer und Crossconnects.

Ein Grundgedanke der Erfindung besteht nun darin, Taktsignalen eine Phasenmodulation aufzuprägen, die für die Taktqualität charakteristisch ist. Dadurch wird ermöglicht, daß über Taktschnittstellen, die ja an sich nur für periodische Pulsfolgen mit Rechteck- oder Sinusform ausgelegt sind, eine Information über die Taktqualität übertragen werden kann.

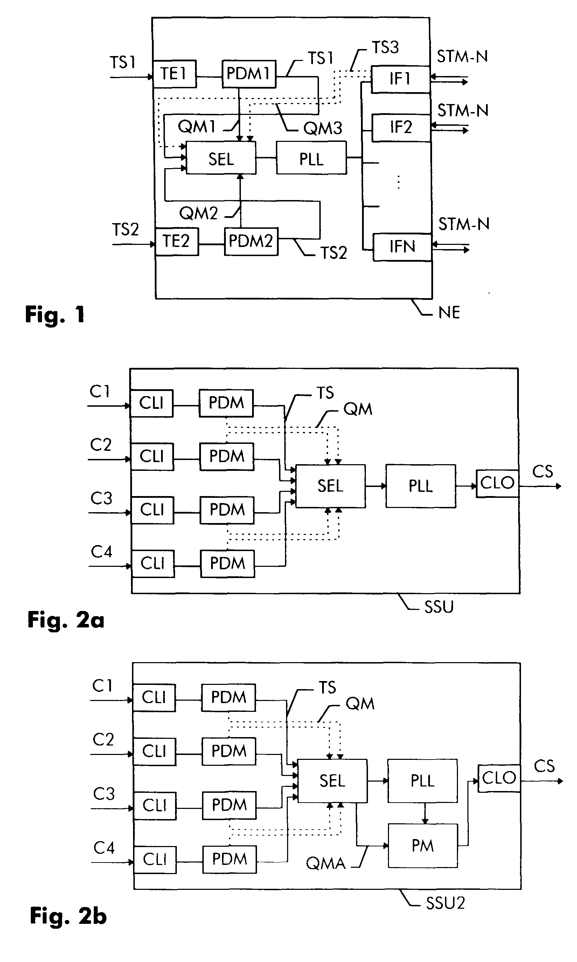

Das in Figur 1 gezeigte Netzelement NE eines ersten Ausführungsbeispiels empfängt an zwei Takteingängen TE1, TE2 je ein Taktsignal TS1, TS2. Den Takteingängen ist jeweils ein Phasendemodulator PDM1, PDM2 nachgeschaltet, der die in den Taktsignalen TS1, TS2 jeweils enthaltene Phasenmodulation erkennt und Qualitätsmerkmale QM1, QM2 daraus ableitet. Die Art der Phasenmodulation ist jeweils charakteristisch für die Taktqualität des Taktsignals, dem die Phasenmodulation aufgeprägt ist. Die beiden Taktsignale TS1, TS2 werden an eine Auswahleinrichtung SEL weitergeleitet; ebenso die aus der Phasenmodulation bestimmten Qualitätsmerkmale QM1, QM2 der beiden Taktsignale. Anhand der Qualitätsmerkmale wählt die Auswahleinrichtung SEL eines der beiden Taktsignale zur Synchronisation aus. Das ausgewählte Taktsignal wird einer internen Taktversorgungsschaltung PLL zugeleitet. Die Taktversorgungsschaltung PLL wird somit auf das ausgewählte Taktsignal synchronisiert. Als interne Taktversorgungsschaltung kann beispielsweise eine digitale Phasenregelschleife mit einem abstimmbaren Oszillator verwendet werden. Sie dient dazu, das Netzelement mit einem internen Takt zu versorgen, welches zur Erzeugung von zu sendenden Nachrichtensignalen verwendet wird, und hält bei Ausfall der Synchronisierung die interne Taktversorgung für einige Sekunden stabil, so daß keine Störungen der Nachrichtenübertragung in dem synchronen Nachrichtenübertragungsnetz auftreten. Die zu sendenden Nachrichtensignale werden in Anschlußeinheiten IF1-IFN erzeugt, die mit den benachbarten Netzelementen des Netzes beispielsweise über Lichtwellenleiter verbunden sind und über die die Netzelemente des Netzes Nachrichtensignale STM-N austauschen.

Die Takteingänge des Netzelementes sind übliche elektrische Taktschnittstellen für 2 MHz-Signale nach ITU-T G.703, die z.B. über Koax-Kabel mit Taktquellen verbunden sind. Solche Taktschnittstellen dienen lediglich der Synchronisation und der Taktversorgung des Netzelementes und können nur periodische Pulsfolgen, nicht jedoch Nachrichtensignale empfangen. Vorteilhafterweise entfernen die Phasendemodulatoren die Phasenmodulation durch Tiefpaßfilterung aus den über die Taktschnittstellen empfangenen Taktsignalen.

Zusätzlich können auch in einem oder mehreren Anschlußeinheiten IF1-IFN weitere Taktsignale TS3 aus empfangenen Nachrichtensignalen mittels Taktableitungsschaltungen abgeleitet und der Auswahleinrichtung zugeleitet werden. Durch Auswertung der in den empfangenen Nachrichtensignalen enthaltenen Synchronisationsstatusmeldungen SSM können Qualitätsmerkmale QM3 ermittelt werden, die die Auswahleinrichtung dann bei der Auswahl einer Referenztaktquelle berücksichtigt. In der Figur 1 ist dies durch gestrichelte Pfeile als drittes Taktsignal TS3 von der Anschlußeinheit IF1 zu der Auswahleinrichtung SEL angedeutet.

Der in Figur 2a gezeigte Taktgenerator SSU eines zweiten Ausführungsbeispiels ist für den Einsatz in einem Netzknoten, der mehrere Netzelemente beinhaltet, ausgelegt. Er enthält ein Taktmodul PLL2 das unsynchronisiert ein Taktsignal mit der Stabilität G.812T liefert. Bei dem Taktmodul PLL2 handelt es sich um eine Phasenregelschleife, die in ihren Spezifikationen den Anforderungen der ITU-T Empfehlung G.812T entspricht. Der Taktgenerator SSU hat vier Eingänge CLI für Taktsignale C1-C4 und einen Taktsignalausgang CLO. Jedem der Taktsignaleingänge CLI ist jeweils ein Phasendemodulator PDM nachgeschaltet. Den empfangenen Taktsignalen C1-C4 kann je nach Taktqualität eine charakteristische Phasenmodulation aufgeprägt sein. Die Phasendemodulatoren erkennen die Phasenmodulation und leiten daraus die jeweilige Taktqualität des ihnen zugeleiteten Taktsignals ab. Vorteilhaft ist, wenn die Phasendemodulatoren die Phasenmodulation mittels Tiefpaßfilterung aus dem jeweiligen Taktsignal herausfiltern.

Die Phasendemodulatoren PDM leiten die Taktsignale TS und Qualitätsinformationen QM für jedes Taktsignal an eine Auswahleinrichtung SEL weiter. Die Verbindungen für die Qualitätsinformationen QM sind als gestrichelte Pfeile gezeichnet, die Verbindungen für die Taktsignale TS als durchgezogene Pfeile. Die Auswahleinrichtung SEL wählt anhand der Qualitätsinformationen QM eines der vier Taktsignale TS aus und leitet das ausgewählte Taktsignal an das Taktmodul PLL2 weiter, um das Taktmodul zu synchronisieren. Hat keines des vier Taktsignale eine bessere oder zumindest gleich gute Qualität wie das Taktmodul im freien, unsynchronisierten Betrieb (hier G.812T), so wird keines der Taktsignale ausgewählt und das Taktmodul wird nicht synchronisiert (sogenannter "hold-over mode"). Das Ausgangstaktsignal des Taktmoduls PLL2 wird am Taktausgang CLO als Referenztaktsignal CS für ein angeschlossenes Netzelement oder einen Netzknoten zur Verfügung gestellt.

Eine vorteilhafte Weiterbildung des Taktgenerators aus Figur 2a ist in Figur 2b gezeigt, wobei gleiche oder gleich wirkende Bauteile mit gleichen Bezugszeichen versehen sind wie in Figur 2a. Die Weiterbildung besteht darin, daß das Ausgangstaktsignal des Taktmoduls PLL2 einem Phasenmodulator PM zugeleitet wird. Der Phasenmodulator PM erhält außerdem von der Auswahleinrichtung eine Qualitätsinformation QMA über die Taktqualität des ausgewählten Taktsignals. Abhängig von dieser Qualitätsinformation prägt der Phasenmodulator dem Ausgangstaktsignal des Taktmoduls PLL2 eine charakteristische Phasenmodulation auf. Das auf diese Weise phasenmodulierte Ausgangssignal wird nun als Referenztaktsignal CS am Taktsignalausgang CLO ausgegeben. Dadurch wird erreicht, daß angeschlossene Netzelemente, die das Referenztaktsignal zur Synchronisation nutzen, mittels der aufgeprägten Phasenmodulation über die Taktqualität des Referenztaktsignals CS informiert werden und diese Information in Form einer Synchronisationsstatusmeldung im Kopfbereich von zu sendenden Nachrichtensignal an andere angeschlossene Netzelemente weiterverteilen können.

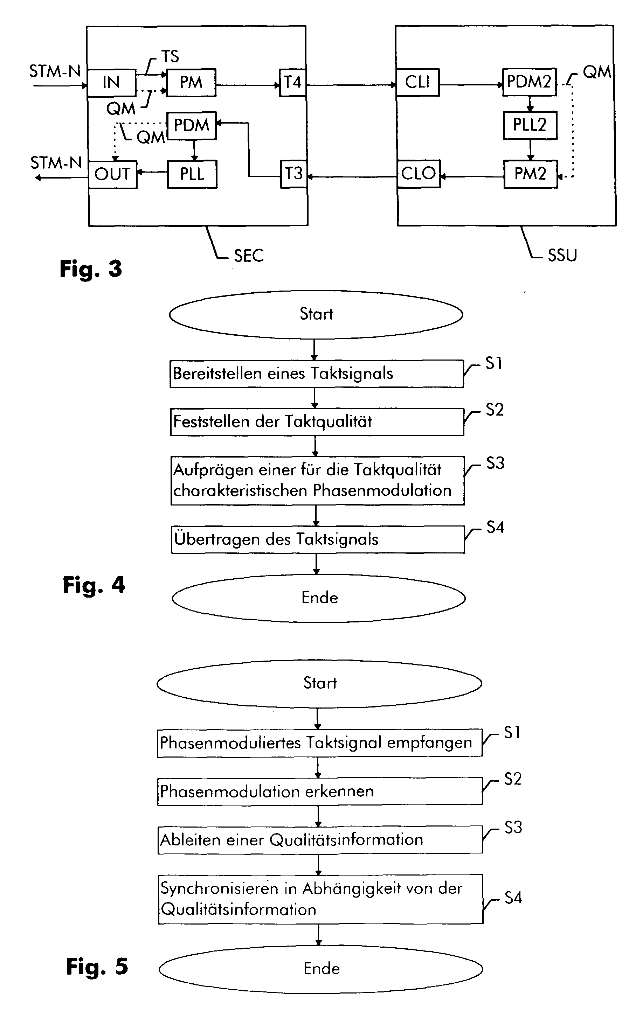

Die Zusammenarbeit zwischen einem erfindungsgemäßen Netzelement SEC und einem erfindungsgemäßen Taktgenerator SSU ist in einem dritten Ausführungsbeispiel in Figur 3 gezeigt. Dabei sind in der Figur nur für die Synchronisation des Netzelementes notwendige Baugruppen gezeigt. Das Netzelement SEC empfängt an einer Schnittstelle IN ein synchrones Nachrichtensignal STM-N. An der Schnittstelle wird von dem Nachrichtensignal ein Taktsignal TS abgeleitet und einem Phasenmodulator PM zugeführt. Zusätzlich wird an der Schnittstelle die in dem Nachrichtensignal enthaltene Synchronisationsstatusmeldung SSM ausgewertet, um die Taktqualität des Taktsignals festzustellen. Eine Qualitätsinformation QM wird ebenfalls an den Phasenmodulator PM gesendet. Der Phasenmodulator prägt dem Taktsignal TS in Abhängigkeit von der Taktqualität eine charakteristische Phasenmodulation auf und stellt das phasenmodulierte Taktsignal an einer Taktschnittstelle T4 als Ausgangssignal zur Verfügung.

Die Taktschnittstelle T4 des Netzelementes SEC ist mit einer Taktschnittstelle CLI des Taktgenerators SSU verbunden. Der Taktgenerator enthält einen Phasendemodulator PDM2, ein Taktmodul PLL2 und einen Phasenmodulator PM2. Das Taktmodul liefert im freien, unsynchronisierten Betrieb (hold-over mode) ein Taktsignal mit der Qualität G.812T. Das an der Taktschnittstellen CLI empfangene Taktsignal wird dem Phasendemodulator PDM2 zugeleitet. Dieser erkennt die dem Taktsignal aufgeprägte Phasenmodulation und leitet daraus eine Qualitätsinformation QM ab, die er dem Phasenmodulator zuleitet. Hat das empfangene Taktsignal eine bessere oder gleich gute Taktqualität wie das Taktmodul PLL2, so wird das Taktsignal an das Taktmodul PLL2 weitergeleitet. Gelangt das Taktsignal vom Phasendemodulator PDM2 zu dem Taktmodul PLL2, so synchronisiert sich das Taktmodul auf das empfangene Taktsignal. Anderenfalls wird in den freien, unsynchronisierten Betrieb übergegangen. Das Ausgangstaktsignal des Taktmoduls wird dem Phasenmodulator zugeleitet, der dem Taktsignal in Abhängigkeit von der Taktqualität, die mittels der Qualitätsinformation QM mitgeteilt wurde, eine charakteristische Phasenmodulation aufprägt. Die Taktqualität kann jedoch nicht schlechter sein als G.812T. Das phasenmodulierte Ausgangstaktsignal wird an einer Taktschnittstelle CLO als Referenztaktsignal zur Verfügung gestellt.

Die Taktschnittstelle CLO des Taktgenerators SSU ist mit einer weiteren Taktschnittstelle T3 für Referenztaktsignale des Netzelementes SEC verbunden. Von dort gelangt das Referenztaktsignal zu einem Phasendemodulator PDM, der wiederum die Phasenmodulation erkennt um daraus die Taktqualität zu bestimmen und eine Qualitätsinformation QM an eine Ausgangsschnittstellenschaltung OUT weiterleitet. Das Referenztaktsignal gelangt von dem Phasendemodulator PDM zu einer Taktversorgungsschaltung PLL, die sich auf das Referenztaktsignal synchronisiert. Das Ausgangstaktsignal der Taktversorgungsschaltung PLL dient als interner Takt für das Netzelement SEC und wird unter anderem der Ausgangsschnittstellenschaltung OUT zugeleitet. Von der Ausgangsschnittellenschaltung OUT werden unter Verwendung des internen Taktes zu sendende synchrone Nachrichtensignale STM-N gebildet. In den Kopfbereich (overhead) dieser zu sendenden Nachrichtensignale wird eine Synchronisationsstatusmeldung SSM eingefügt, die die Taktqualität und damit den Synchronisationszustand des Netzelementes SEC zum Inhalt hat, entsprechend der mitgeteilten Qualitätsinformation QM.

Das in Figur 4 als Flußdiagramm dargestellte erfindungsgemäße Verfahren zum Übertragen eines Taktsignals in einem digitalen synchronen Nachrichtenübertragungsnetz enthält die folgenden Schritte:
- Schritt S1:: Zunächst wird beispielsweise von einem Taktmodul, einem GPS-Empfänger oder einem primären Referenztaktgenerator ein Taktsignal bereitgestellt.
- Schritt S2:: Dann wird die Taktqualität des Taktsignals festgestellt, z.B. anhand dessen Herkunft oder auch anhand einer empfangenen Synchronisationsstatusmeldung in dem Fall, daß das Taktsignal von einem synchronen Nachrichtensignal abgeleitet ist.
- Schritt S3:: Entsprechend der Taktqualität wird dem Taktsignal eine für die Taktqualität charakteristische Phasenmodulation aufgeprägt. Vorteilhafterweise liegt die Phasenmodulation innerhalb der für das Nachrichtenübertragungsnetz maximal zulässigen Grenzen für Phasenschwankungen. Die Phasenmodulation kann eines von mehreren periodischen Phasenmodulationsmustern aufweisen. Beispielsweise kann der zeitliche Abstand zwischen einzelnen Modulationshüben (high/low) um so größer gewählt werden, je besser die Taktqualität ist.
- Schritt S4:: Anschließend wird das phasenmodulierte Taktsignal über eine Taktschnittstelle übertragen.

Anstelle von mehreren Phasenmodulationsmustern kann die Taktqualität auch dadurch signalisiert werden, daß bei schlechter Taktqualität (G.812 und schlechter) eine Phasenmodulation z.B. durch Aufmodulieren von Phasenrauschen verwendet wird und bei guter Taktqualität (G.811) keine Phasenmodulation angewendet wird oder umgekehrt.

In Figur 5 ist ein Flußdiagramm des erfindungsgemäßen Verfahrens zum Synchronisieren von Taktgeneratoren oder Netzelementen eines synchronen digitalen Nachrichtenübertragungsnetzes gezeigt. Es enthält folgende Schritte:
- Schritt ST1:: An einer Taktschnittstelle des Taktgenerators oder des Netzelementes wird ein phasenmoduliertes Taktsignal empfangen. Die Phasenmodulation ist charakteristisch für die Taktqualität.
- Schritt ST2:: Die Phasenmodulation wird mittels eines Phasendemodulators erkannt und vorteilhafterweise entfernt.
- Schritt ST3:: Aus der erkannten Phasenmodulation wird eine Qualitätsinformation abgeleitet.
- Schritt ST4:: In Abhängigkeit von der Qualitätsinformation wird eine Taktversorgungsschaltung des Netzelementes beziehungsweise ein Taktmodul des Taktgenerators synchronisiert. Dabei findet nur dann eine Synchronisation statt, wenn die Taktqualität höher als oder gleich wie die Taktqualität der Taktversorgungsschaltung beziehungsweise des Taktmoduls im freien, unsynchronisierten Betrieb ist.

Eine vorteilhafte Weiterbildung des erfindungsgemäßen Synchronisationsverfahrens besteht darin, daß mehrere phasenmodulierte Taktsignale empfangen werden, denen jeweils eine für ihre Taktqualität charakteristische Phasenmodulation aufgeprägt ist. Auf Basis der Phasenmodulationen wird dann eines der Taktsignale zur Synchronisationausgewählt wird.

Aus den beschriebenen Ausführungsbeispielen wird klar, wie vielfältig das erfindungsgemäße Verfahren zur Übertragung von Taktsignalen in einem Nachrichtenübertragungssystem und zur Synchronisation von Netzelementen oder Taktgeneratoren angewendet werden kann. Die Signalisierung der Taktqualität mittels Phasenmodulation des Taktsignals kann zwischen Netzelementen eines Netzknotens, zwischen Netzelement und Referenztaktgenerator und zwischen Referenztaktgenerator und Netzelement eingesetzt werden. Es ermöglicht die Signalisierung der Taktqualität über einfache Taktschnittstellen und erweitert so die Möglichkeiten, die durch die Einführung der Synchronisationsstatusmeldung SSM in SDH- und SONET-Systemen geschaffen wurden. Das erfindungsgemäße Verfahren ist somit nicht nur als Ersatz für die Signalisierung der Taktqualität mittels SSM anzusehen, sondern auch als Ergänzung z.B. in Fällen, in denen Taktsignale nicht aus Nachrichtensignalen abgeleitet werden können, da nur einfache Taktschnittstellen zur Verfügung stehen.

## Patentansprüche

1. Verfahren zum Übertragen eines Taktsignals (TS1; CS), das zur Synchronisierung eines Netzelementes (NE; SEC) eines synchronen digitalen Nachrichtenübertragungsnetzes dient und bei dem das Taktsignal über eine Taktschnittstelle (T4; TE1, TE2) des Netzelementes von einer Taktquelle (SSU) empfangen wird,
**dadurch gekennzeichnet,** daß
dem Taktsignal (TS1; CS) von der Taktquelle (SSU) in Abhängigkeit von der Taktqualität des Taktsignals eine charakteristische Phasenmodulation aufgeprägt wird.

2. Verfahren nach Anspruch 1, bei dem die Phasenmodulation innerhalb der für das synchrone digitale Nachrichtenübertragungsnetz maximal zulässigen Grenzen für Phasenschwankungen liegt.

3. Verfahren nach Anspruch 1, bei dem die Phasenmodulation abhängig von der Taktqualität eines von mehreren periodischen Phasenmodulationsmustern aufweist.

4. Verfahren nach Anspruch 1, bei dem das Netzelement (SEC) von einem benachbarten Netzelement ein Nachrichtensignal (STM-N) empfängt, bei dem das Netzelement von dem Nachrichtensignal ein Taktsignal (TS) ableitet, bei dem das Netzelement eine Synchronisationsstatusmeldung, die in den empfangenen Nachrichtensignalen enthalten ist, auswertet um die Taktqualität des Nachrichtensignals (STM-N) zu bestimmen, bei dem das Netzelement (SEC) dem abgeleiteten Taktsignal eine Phasenmodulation aufprägt, die die Taktqualität des Nachrichtensignals angibt und bei dem das Netzelement über eine zweite Taktschnittstelle (T4) das phasenmodulierte Taktsignal an einen Taktgenerator (SSU) weiterleitet.

5. Verfahren nach Anspruch 4, bei dem der Taktgenerator (SSU) von mehreren Netzelementen jeweils ein phasenmoduliertes Taktsignal (C1-C4) empfängt, die Phasenmodulation auswertet um daraus die jeweilige Taktqualität zu bestimmen, anhand der Taktqualität eines der empfangenen Taktsignale als Referenztaktsignal (CS) auswählt und an die mehreren oder weitere Netzelemente zur Synchronisation sendet.

6. Verfahren zum Synchronisieren eines Taktgenerators (SSU) oder eines Netzelementes (NE; SEC) eines synchronen digitalen Nachrichtenübertragungsnetzes, bei dem ein Taktsignal (TS1, TS2; C1-C4) über eine Taktschnittstelle (TE1, TE2; CLI) empfangen wird,
**dadurch gekennzeichnet,**
daß dem Taktsignal (TS1, TS2; C1-C4) eine Phasenmodulation aufgeprägt ist, die für die Taktqualität des Taktsignals charakteristisch ist, daß die Phasenmodulation erkannt wird und daraus eine Qualitätsinformation (QM) abgeleitet wird und daß in Abhängigkeit der Qualitätsinformation (QM) der Taktgenerator (SSU) oder das Netzelement (SEC) auf das Taktsignal synchronisiert werden.

7. Verfahren nach Anspruch 6, bei dem mehrere weitere Taktsignale empfangen werden, denen ebenfalls eine für ihre Taktqualität charakteristische Phasenmodulation aufgeprägt ist und daß aufgrund der Taktqualität eines der Taktsignale zur Synchronisation ausgewählt wird.

8. Netzelement (NE; SEC) für ein synchrones digitales Nachrichtenübertragungsnetz mit einer Taktversorgungsschaltung (PLL) zum Versorgen des Netzelementes mit einem internen Takt, mit einer Taktschnittstelle (TE1, TE2; T3) zum Empfangen eines externen Taktsignals (TE1, TE2) von einer Taktquelle (SSU) und mit Mitteln zum Synchronisieren der Taktversorgungsschaltung (PLL) auf das empfangene externe Taktsignal,
**gekennzeichnet durch**
Mittel zum Erkennen einer dem externen Taktsignal (TE1, TE2) aufgeprägten Phasenmodulation, die die Taktqualität des externen Taktsignals angibt.

9. Netzelement (SEC) nach Anspruch 8 mit Mitteln (PM) zum Aufprägen einer Phasenmodulation, die die Taktqualität des internen Taktsignals angibt, auf zu sendende Taktsignale.

10. Taktgenerator (SSU) zum Verteilen eines Taktsignals (CS) an Netzelemente (SEC) eines synchronen digitalen Nachrichtenübertragungsnetzes mit Taktschnittstellen (CLO) zum Anschließen der Netzelemente,
**gekennzeichnet durch**
Mittel (PDM2) zum Erkennen der Taktqualität und Mittel (PM) zum Aufprägen einer Phasenmodulation auf das Taktsignal (CS), die die Taktqualität des Taktsignals angibt.

11. Taktgenerator (SSU) nach Anspruch 10 mit einem Taktmodul (PLL; PLL2) zum Erzeugen des Taktsignals, mit einer Taktschnittstelle (CLI) zum Empfanger eines externen Taktsignals (C1-C4), mit Mitteln (PDM) zum Erkennen einer dem externen Taktsignal aufgeprägten Phasenmodulation, die die Taktqualität des externen Taktsignals angibt, und mit Mitteln zum Synchronisieren des Taktmoduls (PLL; PLL2) auf das externe Taktsignal in Abhängigkeit von dessen Taktqualität.
